# EUROPEAN PATENT APPLICATION

(11) **EP 2 804 404 A1**
(43) Date of publication of application: **19.11.2014**
(21) Application number: 13305624.2
(22) Date of filing: 16.05.2013
(51) Int. Cl.: H04W 4/00, H04L 29/08, G06Q 20/34, H04W 8/24

(54) **Method of installing data in a device comprising a host machine and a secure element**

(71) Applicant: Gemalto SA, 92190 Meudon (FR)
(72) Inventor: Amiel, Patrice, 13705 La Ciotat (FR); Marcotte, Jean-Pierre, 13705 La Ciotat (FR); Merrien, Lionel, 13705 La Ciotat (FR)

(57) **Abstract**

The invention is a method of installing a set comprising first and second parts in a device comprising a host machine and a secure element connected to the host machine. The method comprises the steps of:
- opening a communication session between the device and a remote server, downloading the whole set in the device from the remote server through the communication session,
- storing elements reflecting a previous state of the host machine and of the secure element before the installation of the set,
- installing said first part into the secure element and said second part into the host machine,
- restoring the device in the previous state in case of unsuccessful installation of said first part or said second part,
- sending to the remote server a result notification reflecting the installation of the set through the communication session.

## Description

### (Field of the invention)

The present invention relates to the methods of installing data in a device comprising a host machine and a secure element. It relates particularly to methods of installing a set of data comprising a first part targeting the host machine and a second part targeting the secure element.

### (Background of the invention)

Secure elements are small devices comprising a memory, a microprocessor and an operating system for computing treatments. Such secure elements may comprise a plurality of memories of different types. They are called "secure" because they are able to control the access to the data they contain and to authorize or not the use of data by other machines. The secure elements may also provide computation services based on cryptographic components. In general, secure elements have limited computing resources and limited memory resources and they are intended to be connected to a host machine. Secure elements may be removable or fixed to a host machine. For example, smart cards are a kind of secure elements.

A secure element may contain applications, applicative data, file systems and secret data. The content of a secure element may be accessed by a remote server via a wireless channel or through a wired network, like Internet for instance. For example, secure elements which are intended to be used in Telecom domain or Machine-To-Machine (M2M) domain are able to manage an OTA (Over-The-Air) channel. These secure elements may also be accessed through the HyperText Transfer Protocol, usually called HTTP or HTTPS for the secure mode.

In Telecom domain, a distant server can remotely manage the content of an UICC (Universal Integrated Circuit Card) through a dedicated communication session using a specific protocol. For instance, the server may use the RAM (Remote Applet Management) mechanism as defined by GlobalPlatform ® v 2.2 standard - Amendment B "RAM over HTTP". Another type of server can remotely manage the content of a mobile phone through another dedicated communication session using a protocol dedicated to handset management. For instance, the server may use the OMA-DM (Open Mobile Alliance - Device Management) protocol as defined by OMA-TS-DM V1.2.1 standard.

It is important to note that the standardized current administration protocols are dealing with either the handset only or the UICC only. Usual implementations are really separating the process of administration of mobile phones and of the process of administration of UICCs. Since these administration processes are distinct, there is a risk of lack of consistency between new data installed on a mobile phone and new data installed on the UICC embedded in this mobile phone.

There is a need for allowing a synchronized administration of data to be installed in both a host machine and a connected secure element.

### (Summary of the Invention)

An object of the invention is to solve the above mentioned technical problem.

The object of the present invention is a method of installing a set comprising first and second parts in a device which comprises both a host machine and a secure element connected to the host machine. The method comprises the steps of:
a) opening a communication session between the device and a remote server, downloading the whole set in the device from the remote server through the communication session,
b) storing elements reflecting a previous state of the host machine and of the secure element before the installation of the set,
c) installing said first part into the secure element and said second part into the host machine,
d) restoring the device in the previous state in case of unsuccessful installation of said first part or said second part,
e) sending to the remote server a result notification reflecting the installation of the set through the communication session.

Advantageously, a first application server may provide the remote server with said first part and a second application server distinct from said first application server may provide the remote server with said second part.

Advantageously, the set may be downloaded into the device from the remote server using a first communication protocol for said first part and using a second communication protocol for said second part, said first and second communication protocols being different.

Advantageously, the set may be downloaded into the device from the remote server using a unique communication protocol for both said first and second parts.

Another object of the invention is a device comprising a host machine and a secure element which is connected to the host machine. The device is configured to download a set from a remote server through a single communication session. The set comprises both first and second parts. The device comprises an agent configured to store elements reflecting a previous state of the host machine and of the secure element before the installation of the set. The agent is configured to synchronize installation of said first part into the secure element and installation of said second part into the host machine. The agent is configured to restore the device in the previous state in case of unsuccessful installation of said first part or of said second part. The agent is configured to send to the remote server a result notification reflecting the installation of the set through the communication session.

Advantageously, the agent may be configured to receive said first part using a first communication protocol and to receive said second part using a second communication protocol different from said first communication protocol.

Advantageously, the agent may be configured to receive said first and second parts using a unique communication protocol.

Another object of the invention is a system comprising a device and a distant server wherein the device is according to the above-described device and the distant server is configured to manage the downloading of the set using the single communication session with the device.

Advantageously, said first part may be generated by a first application server and said second part may be generated by a second application server. Said distant server may have a multiplexer means configured to route said first part between the device and said first application server using a first communication protocol and to route said second part between the device and said second application server using a second communication protocol different from said first communication protocol.

Advantageously, said first part may be generated by a first application server and said second part may be generated by a second application server. Said distant server may have a communication means configured to route said first and second parts between the device and said first application server, respectively said second application server using a unique communication protocol.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a system comprising a host machine and a secure element which are administrated by two remote servers according to the prior art model;
- Figure 2 depicts schematically a first example of architecture of a system comprising a host machine and a secure element which are administrated by a remote server according to the invention; and
- Figure 3 depicts schematically a second example of architecture of a system comprising a host machine and a secure element which are administrated by a remote server according to the invention.

### (Detailed description of the preferred embodiments)

The invention may apply to any type of device comprising a host machine and a secure element connected to the host machine. In the following examples, the secure element is a Universal Integrated Circuit Card (UICC) but it could be any other kind of secure element. For example, the secure element may be a Secure Digital (SD) ® token (like a microSD card), and embedded secure element (ESE), a removable secure element or an embedded Universal Integrated Circuit Card (eUICC) which is a non-removable UICC. Such a eUICC may be welded into a host machine. In this specification, the secure element is connected to a host machine. In particular, the host machine may be a mobile phone, a tablet computer, a Personal Digital Assistant (PDA), a telecom terminal or any user equipment. The secure element accesses remote servers through the host machine.

The present invention relies on the establishment of a single communication session between the device and a remote server for downloading data, installing data on both the host machine and the secure element and for sending back a status reflecting the result of the installation.

Thanks to the single communication session, the remote server may send a set of data to be installed into both the host machine and the secure element and may receive the corresponding acknowledgement. When receiving a successful acknowledgement, the remote server is aware that the installation of the full set is correct. Thus the invention relieves the remote server of checking the synchronization of installation of a first data into the host machine and of a second data into the secure element. Thanks to the invention, the remote server does not have to worry about monitoring devices with an update (or install) only partially completed. This considerably reduces the load on the remote server as the number of devices deployed in the field can be very large.

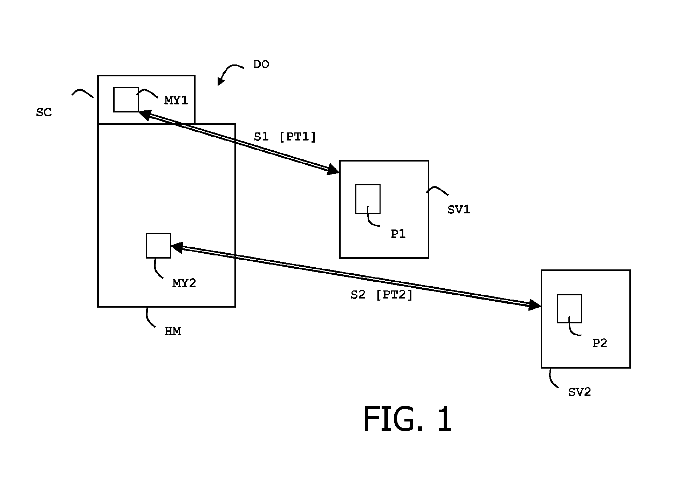

**Figure 1** shows the architecture of a system comprising a device DO which exchanges messages with two application servers SV1 and SV2 according to the prior art model.

The device DO comprises a secure element SC and a host machine HM. The secure element is a UICC and comprises a non volatile memory. The secure element SC comprises a component MY1 in charge of the administration of the data provided by application servers. For instance, the component MY1 may be a secure domain able to manage RAM or RFM over HTTP, over binary SMS, or over CAT_TP over UDP/IP or TCP/IP for receiving data. The host machine is a telecom handset which comprises a non volatile memory and component MY2 in charge of the administration of the data provided by application servers. For example, the component MY2 is able to receive data through the OMA-DM mechanism.

In this example, a new service is going to be installed on the device DO. The new service relies on a set comprising two parts P1 and P2. For instance, the part P1 may be a plurality of files and the part P2 may be a software application compliant with the operating system of the telecom handset HM. The first part P1 is intended to be installed into the secure element SC while the second part P2 is intended to be installed into the host machine. The application server SV1 is dedicated to administration of secure element and provides the part P1. For example, the application server SV1 may be an OTA server dedicated to secure element management. The application server SV2 is dedicated to administration of host machine and provides the part P2. For example, the application server SV2 may be an OMA-DM server dedicated to handset management. A first communication session S1 is established between the server SV1 and the secure element SC (through the host machine HM). The part P1 is conveyed using a communication protocol PT1. For instance, the communication protocol PT1 may be the RFM (Remote File Management) as defined by the ETSI 102 225 and ETSI 102 226 standards. Then the part P1 is installed into the memory of the secure element SC.

Independently, another communication session S2 is established between the server SV2 and the host machine HM. The part P2 is conveyed using a communication protocol PT2 which is different from the protocol PT1. For instance, the communication protocol PT2 may be the previously-referenced OMA-DM standard. Then the part P2 is installed into the memory of the host machine HM.

According to the example of Figure 1, installation of part P1 and installation of part P2 are out of synch.

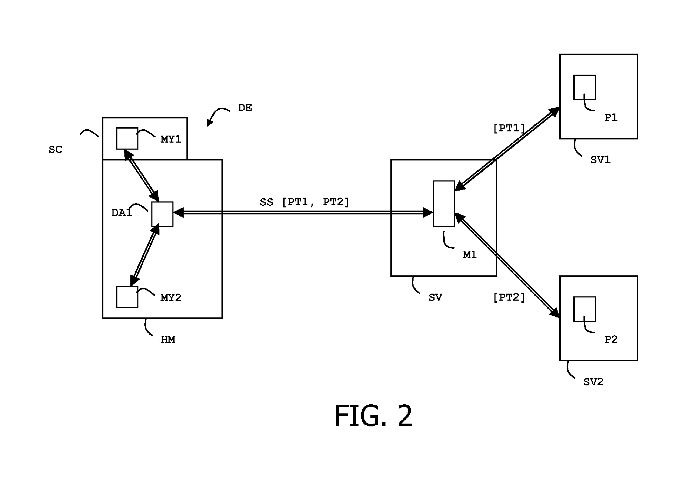

**Figure 2** shows a first example of a system comprising a device DE, a server SV, and two application servers SV1 and SV2 according to the invention.

The device DE comprises a secure element SC and a host machine HM. The secure element SC of Figure 2 is similar to the secure element SC of Figure 1. The host machine HM of Figure 2 is similar to the host machine HM of Figure 1 and comprises in addition an agent DA1.

The application servers SV1 and SV2 of Figure 2 are similar to the application servers of Figure 1. In particular, they contain the same part P1 and P2 as described at Figure 1: for example, a card application or file content for P1, and a set of device services parameters for P2.

The agent DA1 is configured to establish a single communication session SS with the server SV, in order to retrieve a set of data targeting the secure element and the host machine. The set comprises the part P1 and the part P2. The agent DA1 initiates the sending of the set through a pull mechanism. The agent DA1 begins by requesting the content for the secure element SC via the protocol PT1. For getting the part P1, the agent DA1 gives a reference which is recognized by the application servers SV1. For instance, the reference may be the identifier of the secure element SC or any identifier known by the application server SV1 and characterizing the set to be loaded into the device DE. Then the agent DA1 requests the content for the host machine HM via the protocol PT2. For getting the part P2, the agent DA1 gives a reference which is recognized by the application servers SV2. For instance, the reference may be the identifier of the host machine HM or an identifier known by both the agent DA1 and the application servers SV1 and SV2.

The agent DA1 is configured to synchronize the installation of the part P1 into the secure element SC and the installation of the part P2 into the host machine HM.

The agent DA1 is configured to store elements reflecting a previous state of the device DE before the starting of the installing operations. In particular, the agent DA1 stores the initial state of the host machine HM and the initial state of the secure element SC before launching the installation of both parts P1 and P2.

Alternatively, the component MY2 may store the initial state of the host machine HM and the component MY1 may store the initial state of the secure element SC. In this case, the agent DA1 coordinates the backup operation of the initial states by the components MY1 and MY2. The agent DA1 is configured to restore the device DE in its previous (e.g. initial) state in case of unsuccessful installation of the part P1 or of the part P2. In other words, the agent DA1 is able to set both the secure element SC and the host machine HM in their initial states in case of error during the installation process.

The agent DA1 is configured to send to the remote server SV a result notification reflecting the installation of the set through the communication session SS. The result notification has only two possibilities: either the whole set is successfully installed or nothing has been installed.

Alternatively, the agent DA1 may be stored in the secure element SC instead of in the host machine.

In the example of figure 2, the server SV comprises a multiplexer means M1 able to get the part P1 from the application server SV1 using the communication protocol PT1 which is regularly used by the application server SV1. In other words, the server SV1 of Figure 2 behaves like the server SV1 of Figure 1. Moreover, the multiplexer means M1 is able to get the part P2 from the application server SV2 using the communication protocol PT2 which is regularly used by the application server SV2.

This is a pull use case wherein the agent DA1 sends a request for getting the parts P1 and P2 targeting the device DE. The application servers SV1 and SV2 have the responsibility to serve the content that corresponds to the targeted device DE.

The multiplexer means M1 is configured to route parts P1 and P2 between the relevant application servers and the targeted device DE.

The multiplexer means M1 is configured to send the part P1 to the device DE using the communication protocol PT1 through the communication session SS. The multiplexer means M1 is also configured to send the part P2 to the device DE using the communication protocol PT2 through the communication session SS. It is to be noted that the protocols PT1 and PT2 are different. In other words, the multiplexer means M1 is able to multiplex different communication protocols in the same communication session SS.

As soon as the two parts P1 and P2 are downloaded into the device DE, the agent DA1 can start the installing operation in both the host machine and in the secure element. The installing operation may correspond to the install of a new application (or a new set of applicative data) or an update of an existing application. The part P2 is sent to the component MY2 in charge of the administration of the data in the host machine HM. In the case of a mobile phone, the part P2 is sent to the OMA-DM client for instance. The part P1 is sent to the component MY1 in charge of the administration of the data in the secure element SC. In the case of an UICC, the component MY1 can be a Security Domain which received P1 using SCP02 or SCP03 secure channel for instance.

The result of the installing operation of the part P1 (respectively P2) is then sent to the server SV1 (respectively SV2) by the agent DA1 and via the server SV and by using the protocol PT1 (respectively PT2).

Advantageously, if the connection is broken during the data retrieval, the agent DA1 detects the error and re-launches the full download.

Advantageously, in case of re-boot of the device DE (either of the host machine or the secure element) within a critical section, the agent DA1 detects that a critical section was on-going and then determines if some P1/P2 data update is completed or not. If possible, the agent DA1 replays (or continues) the data update. Otherwise, the agent DA1 rollbacks what has been already executed and sends a failed execution report to the server SV.

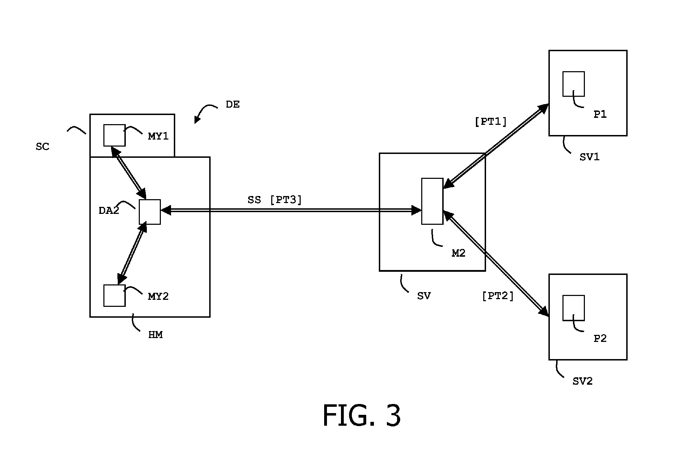

**Figure 3** shows a second example of a system comprising a device DE, a server SV, and two application servers SV1 and SV2 according to the invention.

The device DE comprises a secure element SC and a host machine HM. The secure element SC of Figure 3 is similar to the secure element SC of Figure 1. The host machine HM of Figure 3 is similar to the host machine HM of Figure 1 and comprises in addition an agent DA2. For instance, the host machine HM is a mobile phone.

The application servers SV1 and SV2 of Figure 3 are similar to the application servers of Figure 1. In particular, they contain the same part P1 and P2 as described at Figure 1.

The agent DA2 is similar to the agent DA1 of Figure 2 with the following difference: the agent DA2 is able to communicate with the server SV using a specific communication protocol PT3. For instance, the protocol PT3 may be based on HTTP command/response mechanism. The agent DA2 may send a HTTP command to the server SV for getting P1 and P2 through two different MIME parts of the HTTP response: a first part containing a protocol that is similar to the PT1 protocol of Figure 2, and a second part that is similar to the PT2 protocol of Figure 2.

In the example of figure 3, the server SV comprises a communication means M2 able to get the part P1 from the application server SV1 using the communication protocol PT1 which is regularly used by the application server SV1. Moreover, the communication means M2 is able to get the part P2 from the application server SV2 using the communication protocol PT2 which is regularly used by the application server SV2.

The communication means M2 is configured to send the parts P1 and P2 to the device DE using the specific communication protocol PT3 through the communication session SS. In other words, both the agent DA2 and the communication means M2 are able to use the specific communication protocol PT3 for exchanging data.

Then the agent DA2 sends the result of the installing operation of the part P1 (respectively P2) to the server SV1 (respectively to SV2) via the server SV and by using the specific communication protocol PT3 between the agent DA2 and the server SV.

For instance, the agent DA2 may send a HTTP command containing the result of the installing operation of the part P1 expressed according to the format of the protocol PT1 and the result of the installing operation of the part P2 expressed according to the format of the protocol PT2.

Thanks to the invention, the administration protocols handled by the secure element and the host machine remain unchanged from existing systems. Similarly, the invention does not involve changes to existing application servers SV1 and SV2. The invention provides a solution for a synchronized data download to the device, for a consistent update of the data in the host machine and the secure element and for a synchronized result notification to the remote server.

## Claims

1. A **method** of installing a set comprising first and second parts (P1, P2) in a device (DE) comprising a host machine (HM) and a secure element (SC) connected to the host machine (HM),
**characterized in that** said method comprises the steps of:
a) opening a communication session (SS) between the device (DE) and a remote server (SV), downloading the whole set in the device (DE) from the remote server (SV) through the communication session (SS),
b) storing elements reflecting a previous state of the host machine (HM) and of the secure element (SC) before the installation of the set,
c) installing said first part (P1) into the secure element (SC) and said second part (P2) into the host machine (HM),
d) restoring the device (DE) in the previous state in case of unsuccessful installation of said first part (P1) or said second part (P2),
e) sending to the remote server (SV) a result notification reflecting the installation of the set through the communication session (SS).

2. A method according to claim 1, wherein a first application server (SV1) provides the remote server (SV) with said first part (P1) and wherein a second application server (SV2) distinct from said first application server (SV1) provides the remote server (SV) with said second part (P2).

3. A method according to one of claims 1 to 2, wherein the set is downloaded into the device (DE) from the remote server (SV) using a first communication protocol for said first part (P1) and using a second communication protocol for said second part (P2), said first and second communication protocols being different.

4. A method according to one of claims 1 to 2, wherein the set is downloaded into the device (DE) from the remote server (SV) using a unique communication protocol for both said first and second parts (P1, P2).

5. A **device** (DE) comprising a host machine (HM) and a secure element (SC) connected to the host machine (HM), said device (DE) being configured to download a set from a remote server (SV) through a single communication session (SS), said set comprising first and second parts (P1, P2),
**characterized in that** said device (DE) comprises an agent (DA1) configured to store elements reflecting a previous state of the host machine (HM) and of the secure element (SC) before the installation of the set, **in that** said agent (DA1) is configured to synchronize installation of said first part (P1) into the secure element (SC) and installation of said second part (P2) into the host machine (HM), **in that** said agent (DA1) is configured to restore the device (DE) in the previous state in case of unsuccessful installation of said first part (P1) or said second part (P2), and **in that** said agent is configured to send to the remote server (SV) a result notification reflecting the installation of the set through the communication session.

6. A device according to claim 5, wherein said agent (DA1) is configured to receive said first part (P1) using a first communication protocol and to receive said second part (P2) using a second communication protocol different from said first communication protocol.

7. A device according to claim 5, wherein said agent (DA1) is configured to receive said first and second parts (P1, P2) using a unique communication protocol.

8. A **system** (SY) comprising a device (DE) and a distant server (SV),
**characterized in that** the device (DE) is according to claim 5 and **in that** the distant server (SV) is configured to manage the downloading of the set using the single communication session (SS) with said device (DE).

9. A system according to claim 8, wherein said first part (P1) is generated by a first application server (SV1) and said second part (P2) is generated by a second application server (SV2) and wherein said distant server (SV) has a multiplexer means (M1) configured to route said first part (P1) between the device (DE) and said first application server (SV1) using a first communication protocol and to route said second part (P2) between the device (DE) and said second application server (SV2) using a second communication protocol different from said first communication protocol.

10. A system according to claim 8, wherein said first part (P1) is generated by a first application server (SV1) and said second part (P2) is generated by a second application server (SV2) and wherein said distant server (SV) has a communication means (M2) configured to route said first and second parts (P1, P2) between the device (DE) and said first application server (SV1), respectively said second application server (SV2) using a unique communication protocol.
